(19) Europäisches Patentamt
European Patent Office
Office européen des brevets

(11) **EP 2 070 585 B1**

(12) **EUROPEAN PATENT SPECIFICATION**

(45) Date of publication and mention
of the grant of the patent:
**01.01.2014 Bulletin 2014/01**

(21) Application number: **06811103.8**

(22) Date of filing: **03.10.2006**

(51) Int Cl.:
***B01D 65/02*** (2006.01)     ***C02F 1/44*** (2006.01)
***B01D 61/22*** (2006.01)

(86) International application number:
**PCT/JP2006/319755**

(87) International publication number:
**WO 2008/041320 (10.04.2008 Gazette 2008/15)**

(54) **METHOD OF OPERATING MEMBRANE SEPARATOR**

VERFAHREN ZUM BETRIEB EINES MEMBRANABSCHEIDERS

PROCÉDÉ D'UTILISATION D'UN SÉPARATEUR À MEMBRANE

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**17.06.2009 Bulletin 2009/25**

(73) Proprietor: **Asahi Kasei Chemicals Corporation Tokyo 101-8101 (JP)**

(72) Inventors:
• **TSUKAHARA, Takashi Tokyo 100-8440 (JP)**

• **MORI, Yoshihiko Tokyo 100-8440 (JP)**

(74) Representative: **Strehl Schübel-Hopf & Partner Maximilianstrasse 54 80538 München (DE)**

(56) References cited:
| | |
|---|---|
| WO-A1-03/013706 | WO-A1-2005/021140 |
| WO-A1-2005/082498 | JP-A- 02 164 423 |
| JP-A- 11 147 028 | JP-A- 2001 510 396 |
| JP-A- 2003 103 150 | JP-A- 2006 281 162 |
| JP-A- 2006 281 163 | |

**Description**

Field of the Invention

The present invention relates to a method of operating membrane separators for subjecting water to be treated (hereinafter referred to as untreated water) including river water, lake water, ground water, seawater, domestic wastewater, industrial effluent and secondary treated water of sewage to membrane separation and clearing it of turbidity and germs by using a tank type membrane separator or a chamber type membrane separator of water head difference system or suction system.

Description of Related Art

Conventionally , in the process of treating water, such as clean water treatment, sewage treatment and industrial effluent treatment, the untreated water used to undergo separation into solid and liquid contents in a coagulating sedimentation chamber or a gravity sedimentation chamber. However, along with the advancement of membrane technology, the membrane separation process has come to be used in various filtering apparatuses because it is superior in filtering accuracy and occupies less space for installation and it is easier to control its operation. In recent years, there has come into use a method by which membrane modules are arranged in the untreated water fed to each of the various chambers mentioned above and the water undergoes separation into solid and liquid contents. Thus, membrane modules are arranged in the untreated water containing suspended matter fed into the chamber, the water is filtered with these membrane modules by a sucking action or water head difference, and the filtered water having gone through the membrane module is drawn out of the chamber. Such a process leaves suspended matter in the liquid phase within the chamber as solid contents on the feeding side of the membrane modules, and clean filtered water cleared of turbidity and germs is obtained on the output side of the membrane modules.

In such a membrane separator, as suspended matter in the untreated water sticks to the membrane surface along with the continuation of filtering and clogs its pores, its filtering performance gradually deteriorates, eventually making the separator incapable of filtering. To stabilize filtering against this clogging, it is necessary to perform physical washing, such as gas cleaning by introducing air or some other gas to the untreated water side of the separation membrane (hereinafter referred to as air washing) and back-pressured water washing by ejecting a backwash medium such as filtered water or clean water from the filtered liquid side in the direction reverse to that  of filtering so as to remove what has accumulated on the separation membrane surface (hereinafter referred to as backwashing), thereby peel off the suspended matter having accumulated on the membrane surface, and further discharge the peeled-off suspended matter out of the system. In this process, if the quantity of untreated water in the chamber (held-up quantity) is large, discharging the whole quantity of suspended matter peeled off by the physical washing out of the system will be accompanied by a large quantity of untreated water, resulting in a drop in the ratio of the filtered water quantity to the quantity of the untreated water used, namely the yield of the separator.

In view of this problem, there has been proposed an operating method of a plug flow system by which the yield is controlled by constantly feeding a fixed quantity of untreated water into the chamber in which membrane modules are arranged, and at the same time discharging part of the untreated water out of the system (see Patent Document 1 for instance). However, by the above-described operating method of the conventional membrane separator disclosed in the Patent Document 1, if a high yield of 99% or more, for instance, is to be attained, only 1% or less of the untreated water in the chamber can be discharged out of the system and all the suspended matter peeled off by the physical washing or otherwise cannot be discharged  out of the system with the result that the concentration of the suspended matter in the chamber will gradually rise. For this reason, in order to accomplish stable membrane filtration, it is necessary to operate at a low membrane filtration flux or to increase the out-of-the-system discharged quantity of untreated water containing suspended matter (to lower the yield).

Other known methods include one by which the liquid level on the untreated water side of the filter membrane is lowered while ejecting bubbles from underneath the membrane module to strengthen the effect of air washing (see Patent Documents 2 and 3, for instance) and another by which ozonized air is injected in the form of bubbles into the untreated water side of the filter membrane (see Patent Document 4 for instance). The air washing methods shown in the Patent Documents 4 and 5 utilizing the effect of disappearance of bubbles on the gas-liquid interface or the large oscillation of the liquid surface by the rupture of bubbles are useful for enhancing the washing effect, but they involve a problem of halving the washing effect of cross flows ensuing from the rise of bubbles or the washing effect of the vibration of the filter membrane accompanying the effect of excluding an equivalent to the volume of bubbles. Moreover, as the lowering of the liquid level eliminates water around the filter membrane, the direct contact and friction  between the filter membranes caused by the vibration of bubbles may invite damage to or breaking of the filter membranes. Furthermore, as the suspended matter once peeled off the membrane surface by air washing sticks again to the membrane surface when the liquid level lowers, there is a problem that the concentrated suspended matter cannot be completely discharged out of the system and the washing effect is thereby halved.

Furthermore, as the distance from the filter membranes near the treated water inlet of the membrane module to the inlet is short and accordingly the pressure loss of the fluid (treated water) on the treated water side of the filter membranes is small, there arises an increase in the pressure difference between the untreated water side and the treated water side of the filter membranes, namely the membrane differential pressure, with the result that the filter membranes in the aforementioned position filter a greater quantity of untreated water than the filter membranes elsewhere, are contaminated rapidly and deteriorate in filtering performance. In view of this problem, there is proposed a method by which filtering is performed while keeping part of the filter membranes out of being immersed in the untreated water (see Patent Document 5). However, the operating method for membrane separators disclosed in the Patent Document 5, when applied to the conventional separators described above, invites drying of the filter membranes as they are always partly exposed to the atmosphere. Moreover, as the whole filter membranes are not used, there is a problem that the effective membrane area is reduced.

[Patent Document 1] WO 00/30742
[Patent Document 2] JP-B2-6-71540
[Patent Document 3] JP-B2-3351037
[Patent Document 4] JP-A-63-42703
[Patent Document 5] JP-A-11-147028

WO 2005/082498 A1 discloses a process and an apparatus for filtering water with immersed membranes.
WO 03/013706 A1 discloses a method of cleaning a membrane filtration module.
WO 2005/021140 A1 discloses a method of backwashing a membrane filtration module.

Brief Summary of the Invention

The present invention is intended to provide an operating method which makes possible stable membrane filtering operation while securing a high yield by reducing the load on the filter membranes and performing effective washing.

The present inventors, as a result of exhaustive studies, found the operation method that stable membrane filtering operation can be achieved while securing a high yield by discharging waste water in the chamber out of the system after repeating the filtering step and the physical washing step twice or more and combining a filtering step at which filtering is accomplished in a state that the whole filter membranes are immersed and another filtering step at which filtering is accomplished in a state that the filter membranes are partly immersed, thereby reducing contamination spots in the lengthwise direction of the filter membrane, which serves to enhance the effect of physical washing, and reducing the quantity of untreated water in the chamber, namely the held-up quantity, thereby discharging out of the system the suspended matter peeled off by the physical washing together with the small quantity of untreated water remaining in the chamber, and eventually succeeded in completing the present invention.

Thus, the invention can be summarized as follows:

(1) A method of operating a membrane separator in which a membrane module comprising a large number of immersed hollow fiber membranes is installed in an untreated water chamber, wherein the method includes a filtering step at which untreated water is filtered by giving a differential pressure between the primary side (untreated water side) and the secondary side (treated water side) of the hollow fiber membranes, wherein the filtering step further includes a filtering step (hereinafter referred as the filtering step A) comprising a substep of feeding untreated water into the chamber while starting filtering of the untreated water in a state that the hollow fiber membranes constituting the membrane module are partly immersed and the liquid surface of untreated water in the chamber gradually becomes higher and an ensuing substep of filtering the untreated water in a state that the whole hollow fiber membranes constituting the membrane module are immersed,
a physical washing step of gas washing by ejecting a gaseous washing medium onto the primary side of the membrane module and of back-pressured water washing by feeding a backwashing medium from the secondary side of the hollow fiber membranes and letting it pass to the untreated water side of the hollow fiber membranes and a drain step of discharging waste water in the chamber out of the system after repeating twice or more the filtering step and the physical washing step.

(2) The method of operating a membrane separator according to (1) above may be **characterized in that** the filtering step further includes a filtering step (hereinafter referred as the filtering step B) comprising a substep of filtering untreated water, after the completion of the physical washing step, without feeding untreated water into the chamber until the hollow fiber membranes constituting the membrane module are partly immersed, and an ensuing substep of feeding untreated water into the chamber and filtering the untreated water in a state that the whole hollow fiber membranes constituting the membrane module are immersed.

(3) The method of operating a membrane separator according to (1) or (2) above may be characterized in that the physical washing step is a combination of a step to be executed in a state in which the whole hollow fiber membranes constituting the membrane module are immersed (hereinafter referred as physical washing step A) and another step to be executed in a state in which the hollow fiber membranes constituting the membrane module are partly immersed (hereinafter referred as physical washing step B).

(4) The method of operating a membrane separator according to any of (1) through (3) above may be characterized in that both ends of the membrane module are composed of a large number of immersed hollow fiber membranes fixed by adhesion, with the hollow fiber membranes at the top end being open and the hollow fiber membranes at the bottom end being closed.

(5) The method of operating a membrane separator according to any of (1) through (4) above may be characterized in that, after the filtering step A and the physical washing step are executed and the filtering step B and the physical washing step are repeated once or more, the waste water in the chamber is discharged out of the system.

According to the invention, it is possible to perform effective physical washing while alleviating the loads on filter membranes and to reduce the quantity of the untreated water in the chamber, namely the held-up quantity, thereby enabling membrane filtering to be stably operated while securing a high yield by discharging out of the system the suspended matter peeled off by the physical washing together with a small quantity of untreated water.

[Best Modes for Carrying Out the Invention]

The present invention will be described in detail below with focus on some of the best modes for carrying it out.

Untreated water to which the invention is relevant is for example river water, lake water, ground water, improunded water, secondary treated water of sewage, industrial effluent or sewage. Filtering raw water of any of the kinds mentioned above with membranes in a conventional way involves blocking of suspended matter or any other substance greater in grain size than the pore size of the membranes contained in the raw water, and thus, tends to invite so-called polarization of concentration or formation of a cake layer, and at the same time the membranes are clogged by such suspended matter or the substances or retiform tissues in the membranes adsorb such substances. As a result, the filtering flow velocity of the membranes when filtering raw water drops to only a fraction of or a few tenths of the flow velocity when filtering clean water, and the filtering flow velocity progressively drops with the continuation of filtering.

In such a membrane separator, in order to stabilize filtering, it is necessary to peel off the suspended matter having accumulated on the membrane surface by physical washing of flowing back transmitted water or air from the secondary to the primary side of the filter membrane, and further to discharge the whole quantity of the peeled-off suspended matter out of the system. In this process, if the quantity of untreated water in the chamber (held-up quantity) is large, discharging the whole quantity of suspended matter peeled off by the physical washing out of the system will be accompanied by a large quantity of untreated water, resulting in a drop in the ratio of the filtered water quantity to the quantity of the untreated water used, namely the yield of the separator. Moreover, as the distance from the filter membranes near the treated water inlet of the membrane module to the inlet is short and accordingly the pressure loss of the fluid (treated water) on the treated water side of the filter membrane is small, there is an increase in the pressure difference between the untreated water side and the treated water side of the filter membranes, namely the membrane differential pressure, with the result that the filter membranes in the aforementioned position filter a greater quantity of untreated water than the filter membranes elsewhere, are contaminated rapidly and deteriorate in filtering performance.

The method of operating membrane separators according to the invention is a method whereby the liquid level of untreated water in the chamber is controlled above the upper end face of the membrane module disposed in the chamber, a filtering step A including a filtering step at which, apart from a normal filtering step at which filtering is performed with all the filter membranes, the untreated water is fed into a chamber and suspended matter is stuck to the lower portions of the filter membranes constituting the membrane module by starting filtering of untreated water in a state in which filter membranes constituting the membrane module are partly immersed, and a filtering step B including a filtering step at which, after the completion of a physical washing step, suspended matter is stuck to the lower portions of the filter membranes constituting the membrane module by filtering untreated water until the filter membranes constituting the membrane module are partly immersed without feeding of untreated water into the chamber is performed and, after the filtering steps and the physical washing step are repeated twice or more, concentrated suspended matter is discharged out of the system.

Now, in a case that hollow fiber membranes of 2 m in effective length are used as the filter membranes, theoretical calculation of the pressure losses of the hollow fiber membranes indicates that filter membranes of about 20% in length from the treated water inlet of the membrane module perform filtering of about 50% of the required water to undergo filtering treatment, which means that the former filters a greater volume of untreated water than what is filtered by filter membranes in other regions, resulting in rapid progress of membrane contamination and deterioration in filtering performance. By introducing the filtering steps A and B according to the invention, the filter membranes which otherwise would be prevented from contributing to filtration by the influence of the pressure losses are enabled to be effectively used, and it is thereby made possible to reduce contamination spots in the lengthwise direction of the filter membranes. Further, due to the repetition of the filtering steps and the physical washing step twice or more and thereby reducing the held-up quantity of the membrane separator, when the suspended matter peeled off by the physical washing is to be discharged out of the system, it is discharged together with only a small quantity of untreated water, thereby making possible stable membrane filtering operation at a high yield.

Here, the membrane filtering flow rate in the state in which the filter membranes constituting the membrane module are partly immersed may be controlled to the same level as, or a lower level or a higher level than, that at the normal filtering step, but it is preferable to control it to a level not higher than the membrane filtering flow rate at the normal filtering step.

It is more preferable, where the length of the filter membranes constituting the membrane module in the vertical direction being represented by L and the vertical length of the filter membranes not in contact with the untreated water on the liquid surface of the untreated water in the chamber in the state in which the filter membranes are partly immersed being represented by L', to perform filtering in the state in which the filter membranes are partly immersed at a membrane filtering flow rate F2 satisfying the condition of

$$F2 \leq F1 \leq (L - L')/L \ (L > L', \ L > 0, \ L > L' \leq 0)$$

relative to the membrane filtering F1 at the normal filtering step.

Further, where backwashing by which a backwash medium, which may be filtered water or clean water, is passed from the filtered liquid side to the untreated water side in the direction reverse to that of filtering to remove what has accumulated on the separation membrane surface is used as the method of physical washing, the filtered water or clean water which has been used at the physical washing step can be stored in the chamber in its whole quantity or in part to be reused as part of the untreated water. Therefore, the operation can be accomplished at a higher yield than otherwise by repeating the filtering operation and the physical washing step twice or more before executing the drain step at which the whole quantity of the suspended matter peeled off by the physical washing is to be discharged out of the system.

Incidentally, in order to enhance the washing effect of the physical washing step, it is preferable to add an oxidizer, such as sodium hypochlorite or ozone, to the backwash medium to be used for backwashing, and further it is effective to contain ozone or some other oxidizer in air washing of introducing gas of air as bubbles on the untreated water side of the filter membranes. However, as stated above, air washing under the conventional conditions did not always prove sufficiently effective on account of the constraint in respect of the durability of filter membranes.

A filter membrane washing method according to the invention, by combining a step executed in the state in which the hollow fiber membranes constituting the membrane module are wholly immersed (hereinafter referred to as the physical washing step A) and a step executed in the state in which the hollow fiber membranes constituting the membrane module are partly immersed (hereinafter referred to as the physical washing step B), can provide the whole filter membranes with (a) a washing effect by a cross flow accompanying the rising of bubbles, (b) a washing effect by the vibration of filter membranes ensuing from the effect to exclude an equivalent of liquid to the volume of bubbles and (c) the effect of disappearance of bubbles on the gas-liquid interface and a washing effect by substantial oscillation of the liquid surface by the rupture of bubbles, further makes it possible to (d) discharge completely out of the system the suspended matter peeled off the filter membranes because the suspended matter once peeled off the membrane surface by the gas washing does not stick to the membrane surface again, and (e) to peel off the suspended matter from the filter membrane surface more efficiently as compared with the conventional air washing method because a sufficient length of time can be secured during which the filter membranes of the membrane module near the treated water inlet remain in contact with bubbles.

The level of the liquid surface of the untreated water when the untreated water in the membrane module is once lowered by filtering or discharging at the physical washing step B may be at any height in the vertical direction of the filter membranes, but in order to provide the five effects of washing stated above to the whole filter membranes it is preferable to reduce the level to the very bottom of the filter membranes in their vertical direction. Also, as alternative methods for raising the liquid surface of the untreated water around the filter membranes from the lower part to the upper part at the gas washing step B, there are methods by which the liquid surface of the untreated water around the filter membranes is raised while performing backwashing and another method by which liquid surface of the untreated water around the filter membranes is raised while feeding the untreated water, but the method of raising the liquid surface of the untreated water around the filter membranes by backwashing is more preferable. Incidentally, (1) backwashing is more effective when performed always at the same time as air washing, but (2) air washing alone may as well be performed ahead of the introduction of backwashing. Or, (3) air washing alone may also be performed after the introduction of backwashing. Further, (4) it is also conceivable to introduce backwashing while letting in untreated water and perform air washing at the same time, or (1) through (4) may be combined alternately.

Now at the steps of washing the filter membrane, the durations of the physical washing step A and the physical washing step B during the whole washing period may be at any ratio, but it is preferable to be set in the range of 1:10 to 10:1.

Further, when air washing is to be performed while raising the liquid surface, since the absence of water around the filter membranes will last for only a short period, damage to or breaking of the filter membranes through the direct contact and friction between them and the drying of the membranes can be prevented. Moreover, as the washing effect is greater as compared with the conventional air washing method, the quantity of the gaseous washing medium used can be reduced, and this accordingly is an advantage in terms of the durability and energy efficiency of the filter membranes and the membrane module.

Or where air washing is to be accomplished by ejecting a gaseous washing medium in a bubble form toward the untreated water side of the filter membranes while raising the liquid surface of the untreated water of the filter membranes according to the invention, if gas containing at least one of oxidizers including chlorine, chlorine dioxide, hydrogen peroxide and ozone gas is used as the gaseous washing medium or backwashing with gas containing at least one of these oxidizers is used in combination, the washing effect can be further enhanced. The duration of air washing can be appropriately determined with due consideration given to the restorability of the filtering pressure and the time utilization rate of the filtering equipment.

The material for the filter membranes to be used according to the invention may include, though not limited to, for instance polyolefin such as polyethylene, polypropylene or polybutene; a fluoric resin such as a tetrafluoroethylene-perfluoroalkylvinylether copolymer (PFA), a tetrafluoroethylen-hexafluoropropylene copolymer (FEP), a tetrafluoroethylene-hexafluoropropylene-perfluoroalkylvinylether copolymer (EPE), a tetrafluoroethylene-ethylene copolymer (ETFE), polychlorotrifluoroethylene (PCTFE), an chlorotrifluoroethylene- ethylene copolymer (ECTFE) or polyvinylidene fluoride (PVDF); a super-engineering plastic such as polysulfone, polyether sulfone, polyether ketone, polyether-ether ketone or polyphenylene sulfide; a cellulose such as cellulose acetate or ethyl cellulose; polyacrylonitrile; or polyvinyl alcohol, each by itself or a mixture of more than one of these. Where a powerful oxidizer such as ozone is to be used in combination, a ceramic or some other inorganic membrane or an organic membrane of a fluoric resin such as a polyvinylidene fluoride (PVDF) membrane, a polytetrafluoroethylene (PTFE) membrane, ethylene-tetrafluoroethylene copolymer (ETFE) membrane or a tetrafluoroethylene-parfluoroalkylvinylether copolymer (PFA) membrane can be applied. Out of these filter membranes, one ranging in pore size from the nano-filtration (NF) film to the micro-filtration (MF) film can be preferably used. An NF of about 100 in molecular weight cut off to an MF of no more than 10 $\mu$m in average pore size is particularly preferable. The filter membranes may be hollow fiber-shaped or hollow fiber-shaped with a wave.

The membrane module for use in the invention is so configured that the top and bottom ends of a bundle of membranes composed of a large number of filter membranes are fixed by adhesion, one or both of the ends being open, and the sectional shape of the ends to be fixed by adhesion may be not only round but also triangular, rectangular, hexagonal, oval or the like, but a membrane module having the openings of the membranes at the top end and a skirt-structured part for letting gas in and gas inlet holes to let the gas onto the external surface of the filter membranes at the bottom end is preferable. The membrane module can be installed in either a perpendicular or horizontal direction relative to the ground surface, but perpendicular installation is particularly preferable. Further, where a plurality of membrane modules are to be arranged in the same chamber, there is no particular limitation to the positions of arranging the membrane modules, but arranging them in the positions of the tightest filling where the held-up quantity is minimized is preferable. The system of filtering may be either total quantity filtering or cross flow filtering. The method of applying the filtering pressure may be either suction filtering or by water head difference. Either internal pressure filtering or external pressure filtering can be used.

As the present invention is configured as described above, it makes possible stable membrane filtering operation while maintaining a high yield and secure discharging of a sufficient quantity of untreated water containing suspended matter out of the system.

Regarding the invention, an example of mode of carrying out the method of operating the membrane separator will be described in detail below with reference to the accompanying drawings.

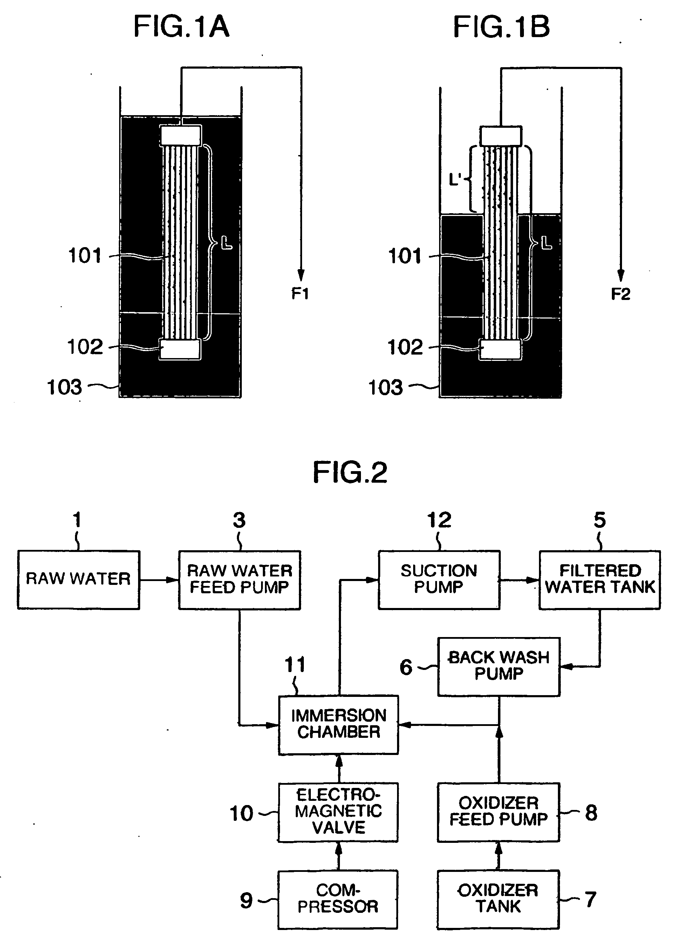

Fig. 1A is a schematic diagram showing a state of operation in the normal filtering step, by using a membrane module 102 having a bundle of membranes composed of a large number of filter membranes 101 which are installed in a perpendicular direction in a chamber 103, whose both ends are fixed by adhesion and which have the openings of the membranes at the top end and a skirt-structured part for letting gas in and gas inlet holes to let the gas onto the external surface of the filter membranes at the bottom end (hereinafter referred to as the "membrane module"), to control the liquid surface of untreated water above the top end face of the membrane module 102 installed in the chamber 103, and to filter the untreated water at all the filter membranes 101, and Fig. 1B is a schematic diagram showing a state of operation of the filtering step to filter the untreated water in a state that the filter membranes 101 constituting the above membrane module 102 are partly immersed.

At the normal filtering step in Fig. 1A, as the liquid surface of the untreated water in the chamber 103 is controlled above the top end face of the membrane module 102, filtering is accomplished by the whole filter membranes 101 constituting the membrane module 102. As the method of controlling the liquid surface in the normal filtering step, either the quantity of untreated water fed into the chamber 103 may be controlled by the use of a liquid level gauge or by a plug flow in which a constant quantity of untreated water is fed into the chamber all the time and part of the untreated water is discharged out of the system at the same time.

On the other hand, at the filtering step where untreated water is filtered in a state in which the filter membranes 101 are partly immersed in Fig. 1B, since filtering may be performed in a state in which the feeding of untreated water into the chamber 103 is temporarily suspended or on the way of feeding untreated water into the chamber 103, filtering is accomplished by part of the filter membranes 101 of the membrane module 102 while the liquid surface of untreated water in the chamber 103 gradually becomes higher than the top end face of the membrane module 102.

It is preferable here to determine the membrane filtering flow rate at this filtering step in the following way. When the length L of the filter membranes 101 = 2 m, the length L' of the filter membranes 101 not in contact with untreated water with respect to the liquid surface of the untreated water in the chamber 103 at the end or start of the filtering step in a state in which the filter membranes 101 are partly immersed = 0.5 m, and a membrane filtering flow rate $F1$ at the normal filtering step = 5.0 $m^3$/hr (the flow rate at which a single membrane module gives 5.0 $m^3$ per hour of filtered water), a membrane filtering flow rate $F2$ at the filtering step where the filter membranes 101 are partly immersed will be, as follows:

$$F2 \leq F1 \times (L - L')/L$$
$$\leq 5.0 \times ((2.0 - 0.5)/2.0)$$
$$\leq 3.75 \ m^3/hr$$

(a flow rate at which a single membrane module gives 3.75 $m^3$ per hour of filtered water). This means in this case so controlling the membrane filtering flow rate as not to exceed 3.75 $m^3$/hr in the state in which the filter membranes 101 are partly immersed. At the filtering step in the state in which the filter membranes 101 are partly immersed, in order to prevent compression of suspended matter having accumulated on filter membranes 101 not in contact with untreated water and drying of the filter membranes 101, it is preferable to achieve early arrival at a prescribed liquid level and end the filtering step in the state in which the filter membranes 101 are partly immersed.

Fig. 2 shows an example of flow using the above membrane module to which the operating method according to the invention is applied. Raw water or untreated water 1 is fed by a raw water feed pump 3 to an immersion chamber 11 in which the membrane module is installed, and filtered water obtained with a suction pump 12 is stocked in a filtered water tank 5, which also serves as a backwash tank. Whereas filtered water in the filtered water tank 5 is fed by a backwash pump 6 to the membrane module to be backwashed at the time of backwashing, it is possible here to add oxidizer in an oxidizer tank 7 to the backwash water on the way of piping from the backwash pump 6 to the membrane module with an oxidizer feed pump 8. Air washing to introduce air into the membrane module is accomplished by feeding air compressed by a compressor 9 to the untreated water side of the membrane module. The source of the compressed air to be used here for air washing may be a blower instead of the compressor.

A method of operating a membrane separator usually is a combination of a filtering step to obtain filtered water, a physical washing step to remove suspended matter having accumulated on the membrane surface and a drain step to discharge suspended matter having accumulated in the chamber out of the system. Now according to the present invention, it is preferable to perform the filtering step A and the physical washing steps (including physical washing steps A and B) and, after repeating the filtering step B and the physical washing steps once or more, to discharge the whole quantity of drain water in the chamber out of the system.

Further, when the rate of concentration is to be caused to reach a prescribed level (the yield is to be raised) by repeating the filtering steps and the physical washing steps a plurality of times, it is preferable to achieve the prescribed rate of concentration by repeating the filtering steps and the physical washing steps the least number of times possible. Thus, as the chamber in which the membrane module is to be installed in the membrane separator, it is preferable to use such a chamber that will minimize the held-up quantity in the part in which the membrane module is installed, namely the quantity of untreated water per unit membrane area (= the quantity of water remaining after the subtraction of the volume of the hollow fiber membranes constituting the membrane module from the capacity of membrane module-installed part).

Next, the invention will be described in further detail with reference to embodiments thereof.

[Embodiment 1]

The membrane modules used, each measuring 6 inches in diameter and 2 m in membrane length, were three bundles, 50 m$^2$ in membrane area, of polyvinylidene fluoride-made hollow fiber type micro-filtration filter membranes of 0.1 μm in nominal pore size. The top and bottom ends of the membrane modules were fixed by adhesion, with the hollow fiber membranes at the top end face being open and the hollow fiber membranes at the bottom end face being closed. As the chamber in which the membrane modules were to be installed upright, a camber was used in which the chamber of the membrane module-installed part would occupy an installation floor space of 0.109 m$^2$ and its effective water depth would be 2.3 m, and for stocking the backwash waste water from physical washing, a buffer chamber of 0.25 m$^2$ in bottom area and 0.6 m in effective water depth was provided on the chamber.

The held-up quantity in the membrane module-installed part of this membrane separator, namely the quantity of untreated water per unit membrane area (= the quantity of water remaining after the subtraction of the volume of the hollow fiber membranes constituting the membrane module from the capacity of membrane module-installed part) was 1.36 L/m$^2$.

By using the membrane separator, continuous operation was performed on river water of 1 to 3 degrees in turbidity as untreated water. As the steps of operation, a untreated water feeding step, the filtering steps and physical washing steps according to the invention, and a drain step were combined.

Regarding the set conditions for the steps of operation, at the untreated water feeding step, the quantity of untreated water to be fed into the chamber was set to 12 m$^3$/hr. At the filtering step, (Step 1) when the untreated water reached a half of the membrane length, filtering operation was started; then (Step 2) in a state in which the whole membranes were immersed, filtering operation was performed for about 26 minutes and, (Step 3) immediately before the physical washing step was performed, filtering operation was carried on until the untreated water reached a half of the membrane length. The filtering operation was carried out with a differential membrane pressure being applied to the secondary side of the membrane as the negative pressure side. The membrane filtering flow rates at the respective filtering steps were 6 m$^3$/hr (2 m$^3$/hr per membrane module) at (Step 1) and (Step 3), and 12 m$^3$/hr (4 m$^3$/hr per membrane module) at (Step 2). The total filtering process duration from (Step 1) through (Step 3) was about 28 minutes. Incidentally, the quantity of untreated water to be fed at (Step 2) was made equal to the membrane filtering flow rate.

After the completion of the filtering step, the physical washing step was performed. At the physical washing step, backwashing and gas washing with air were carried out simultaneously. The flow rate of backwashing was set to 12 m$^3$/hr (4 m$^3$/hr per membrane module) and the flow rate of air used for gas washing, 12 Nm$^3$/hr (4 Nm$^3$/hr per membrane module).

After the concentration in the chamber was increased 100 times (99.0% in yield) by repeating the filtering step and the physical washing step five times, the drain step to discharge the concentrated waste water in the chamber was carrier out. At the drain step to discharge the suspended matter peeled off at the physical washing step, it was discharged by fully opening 80A piping conforming to JIS installed at the bottom of the chamber, and by keeping the valve open for 15 seconds after a pressure type liquid level sensor installed at the bottom of the chamber detected that the water depth in the chamber came to 0 m, the concentrated waste water was completely discharged out of the chamber.

Operation for about seven months under these operating conditions gave an inter-membrane differential pressure no more than 70 kPa, indicating that stable operation was possible.

[Embodiment 2]

The membrane module used, measuring 3 inches in diameter and 1 m in membrane length, was a bundle, 6.8 m$^2$ in membrane area, of polyvinylidene fluoride-made hollow fiber type micro-filtration filter membranes of 0.1 μm in nominal pore size. The top and bottom ends of the membrane module were fixed by adhesion, with the hollow fiber membranes at the top end face being open and the hollow fiber membranes at the bottom end face being closed. As the chamber in which the membrane modules were to be installed upright, a chamber was used in which the chamber of the membrane module-installed part would occupy an installation floor space of 0.0134 m$^2$ and its effective water depth would be 1.18 m, and for stocking the backwash waste water used at the physical washing, a buffer chamber of 0.049 m$^2$ in bottom area and 0.35 m in effective water depth was provided on the chamber.

The held-up quantity in the membrane module-installed part of this membrane separator, namely the quantity of untreated water per unit membrane area (= the quantity of water remaining after the subtraction of the volume of the hollow fiber membranes constituting the membrane module from the capacity of membrane module-installed part) was 2.00 L/m$^2$.

By using the membrane separator, continuous operation was performed on industrial water of 10 degrees in average turbidity and 200 to 300 degrees in maximum turbidity as untreated water. As the steps of operation, a untreated water feeding step, the filtering steps and physical washing steps according to the invention, and a drain step were combined.

Regarding the set conditions for the steps of operation, at the untreated water feeding step, the quantity of untreated water to be fed into the chamber was set to 2 m$^3$/hr. At the filtering step, (Step 1) when the untreated water reached a half of the membrane length, filtering operation was started; then (Step 2) in a state in which the whole membranes were immersed, filtering operation was performed for about 20 minutes and, (Step 3) immediately before the physical washing step was performed, filtering operation was carried on until the untreated water reached a half of the membrane length. The filtering operation was carried out with a differential membrane pressure being applied to the secondary side of the membrane as the negative pressure side. The membrane filtering flow rates at the respective filtering steps were 0.1 m$^3$/hr at (Step 1) and (Step 3), and 0.17 m$^3$/hr at (Step 2). The total filtering process duration from (Step 1) through (Step 3) was about 22.0 minutes.

After the completion of the filtering step, the physical washing step was performed. At the physical washing step, backwashing and gas washing with air were carried out simultaneously. The flow rate of backwashing was set to 0.28 m$^3$/hr and the flow rate of air used for gas washing, 1.2 Nm$^3$/hr.

After the concentration in the chamber was increased 20 times (95.0% in yield) by repeating the filtering step and the physical washing step six times, the drain step to discharge the concentrated waste water in the chamber was carrier out. At the drain step to discharge the suspended matter peeled off at the physical washing step, it was discharged by fully opening 50A piping conforming to JIS installed at the bottom of the chamber, and by keeping the valve open for five seconds after a pressure type liquid level sensor installed at the bottom of the chamber detected that the water depth in the chamber came to 0 m, the concentrated drain was completely discharged out of the chamber.

Operation for about three months under these operating conditions gave an inter-membrane differential pressure no more than 30 kPa, indicating that stable operation was possible.

[Comparative Example 1]

The membrane module and the membrane separator used in Comparative Example 1 were the same as those used in Embodiment 2. By using the membrane separator, continuous operation was performed on industrial water of 10 degrees in average turbidity and 200 to 300 degrees in maximum turbidity as untreated water. As the steps of operation, a untreated water feeding step, the filtering steps and physical washing steps, and a drain step were combined.

Regarding the set conditions for the steps of operation, at the untreated water feeding step, the quantity of untreated water to be fed into the chamber was set to 2 m$^3$/hr. At the filtering step, in order to achieve the same level of concentration as in Embodiment 2, filtering operation was performed for about 120 minutes in a state in which the whole membranes were immersed. Incidentally, the filtering operation was carried out with a differential membrane pressure being applied to the secondary side of the membrane as the negative pressure side. The membrane filtering flow rate at the filtering step was 0.17 m$^3$/hr.

After the completion of the filtering step, the physical washing step was performed. At the physical washing step, backwashing and gas washing with air were carried out simultaneously. The flow rate of backwashing was set to 0.28 m$^3$/hr and the flow rate of air used for gas washing, 1.2 Nm$^3$/hr.

After the concentration in the chamber was increased 20 times (95.0% in yield) by carrying out the filtering step and the physical washing step once each, the drain step to discharge the concentrated waste water in the chamber was carrier out. At the drain step to discharge the suspended matter peeled off at the physical washing step, it was discharged by fully opening 50A piping installed at the bottom of the chamber, and by keeping the valve open for five seconds after a pressure type liquid level sensor installed at the bottom of the chamber detected that the water depth in the chamber came to 0 m, the concentrated drain was completely discharged out of the chamber.

When operation was carried on for about two weeks under these operating conditions, the inter-membrane differential pressure surpassed 80 kPa, making it impossible to give no more negative pressure, and stable operation was made impossible.

[Embodiment 3]

In Embodiment 3, one membrane module of the same specification as in Embodiment 1 was used. As the chamber in which the membrane modules were to be installed upright, a chamber was used in which the chamber of the membrane module-installed part would occupy an installation floor space of 0.0283 m$^2$ and its effective water depth would be 2.72 m, and for stocking the backwash waste water from physical washing, a buffer chamber of 0.126 m$^2$ in bottom area and 0.46 m in effective water depth was provided on the chamber.

The held-up quantity in the membrane module-installed part of this membrane separator, namely the quantity of untreated water per unit membrane area (= the quantity of water remaining after the subtraction of the volume of the hollow fiber membranes constituting the membrane module from the capacity of membrane module-installed part) was 1.21 L/m$^2$.

By using the membrane separator, continuous operation was performed on dam water of 5 degrees in average turbidity and 300 to 500 degrees in maximum turbidity as untreated water. As the steps of operation, a untreated water feeding step, the filtering steps and physical washing steps according to the invention, and a drain step were combined.

Regarding the set conditions for the steps of operation, at the untreated water feeding step, the quantity of untreated water to be fed into the chamber was set to 2 m$^3$/hr. At the filtering step, (Step 1) when the untreated water reached a half of the membrane length, filtering operation was started; then (Step 2) in a state in which the whole membranes were immersed, filtering operation was performed for about 15 minutes and, (Step 3) immediately before the physical washing step was performed, filtering operation was carried on until the untreated water reached a half of the membrane length. The filtering operation was carried out with a differential membrane pressure being applied to the secondary side of the membrane as the negative pressure side. The membrane filtering flow rates at the respecive filtering steps were 0.9 m$^3$/hr at (Step 1) and (Step 3), and 1.83 m$^3$/hr at (Step 2). The total filtering process duration from (Step 1) through (Step 3) was about 17 minutes.

After the completion of the filtering step, the physical washing step was performed. At the physical washing step, backwashing and gas washing with air were carried out simultaneously. The flow rate of backwashing was set to 2 m$^3$/hr and the flow rate of air used for gas washing, 4 Nm$^3$/hr.

After the concentration in the chamber was increased 20 times (95.0% in yield) by repeating the filtering step and the physical washing step six times, the drain step to discharge the concentrated waste water in the chamber was carrier out. At the drain step to discharge the suspended matter peeled off at the physical washing step, it was discharged by fully opening 50A piping installed at the bottom of the chamber, and by keeping the valve open for 15 seconds after a pressure type liquid level sensor installed at the bottom of the chamber detected that the water depth in the chamber came to 0 m, the concentrated drain was completely discharged out of the chamber.

Operation for about eight months under these operating conditions gave an inter-membrane differential pressure no more than 30 kPa, indicating that stable operation was possible.

[Comparative Example 2]

The membrane module used, measuring 6 inches in diameter and 2 m in membrane length, was a bundle, 50 m$^2$ in membrane area, of polyvinylidene fluoride-made hollow fiber type micro-filtration filter membranes of 0.1 μm in nominal pore size. The top and bottom ends of the membrane module were fixed by adhesion, with the hollow fiber membranes at the top end face being open and the hollow fiber membranes at the bottom end face being closed. As the chamber in which the membrane modules were to be installed upright, a chamber of 0.173 m$^2$ in bottom area and 3.0 m in effective water depth was used.

The held-up quantity in the membrane module-installed part of this membrane separator, namely the quantity of untreated water per unit membrane area (= the quantity of water remaining after the subtraction of the volume of the hollow fiber membranes constituting the membrane module from the capacity of membrane module-installed part) was 10.0 L/m$^2$.

By using the membrane separator, continuous operation was performed on dam water of 5 degrees in average turbidity and 300 to 500 degrees in maximum turbidity as untreated water. As the steps of operation, an untreated water feeding step, the filtering steps and physical washing steps, and a plug flow step of constantly discharging part of untreated water were combined.

Regarding the set conditions for the steps of operation, at the untreated water feeding step, the quantity of untreated water to be fed into the chamber was set to 2 m$^3$/hr. At the filtering step, filtering operation was performed for about 15 minutes in a state in which the whole membranes were immersed. The filtering operation was carried out with a differential membrane pressure being applied to the secondary side of the membrane as the negative pressure side. The membrane filtering flow rate at the filtering step was 1.83 m$^3$/hr.

After the completion of the filtering step, the physical washing step was performed. At the physical washing step, backwashing and gas washing with air were carried out simultaneously. The flow rate of backwashing was set to 2 m$^3$/hr and the flow rate of air used for gas washing, 4 Nm$^3$/hr.

Part of untreated water was constantly discharged to raise the concentration in the chamber to about 5.9 times (83% in yield).

Operation for about four months under these operating conditions gave an inter-membrane differential pressure of no more than 40 kPa, indicating that stable operation was possible.

[Embodiment 4]

The membrane module and the membrane separator used in Embodiment 4 were the same as those used in Embodiment 1. By using the membrane separator, continuous operation was performed on river water of 5 to 10 degrees in average turbidity and 200 to 300 degrees in maximum turbidity as untreated water. Sodium hypochlorite was added to the untreated water to make the concentration of residual chlorine about 0.5 mg/L. As the steps of operation, a untreated water feeding step, the filtering steps and physical washing steps according to the invention, and a drain step were combined.

Regarding the set conditions for the steps of operation, at the untreated water feeding step, the quantity of untreated water to be fed into the chamber was set to 13.5 m$^3$/hr. At the filtering step, (Step 1) when the untreated water reached a half of the membrane length, filtering operation was started; then (Step 2) in a state in which the whole membranes were immersed, filtering operation was performed for about 26 minutes and, (Step 3) immediately before the physical washing step was performed, filtering operation was carried on until the untreated water reached a half of the membrane length. The filtering operation was carried out with a differential membrane pressure being applied to the secondary side of the membrane as the negative pressure side. The membrane filtering flow rates at the respective filtering steps were 7.5 m$^3$/hr (2.5 Nm$^3$/hr per membrane module)at (Step 1) and (Step 3), and 13.5 m$^3$/hr (4.5 Nm$^3$/hr per membrane module)at (Step 2). The total filtering process duration from (Step 1) through (Step 3) was about 28 minutes.

After the completion of the filtering step, the physical washing step was performed. At the physical washing step, backwashing and gas washing with air were carried out simultaneously. The flow rate of backwashing was set to 20.25 m$^3$/hr (6.75 Nm$^3$/hr per membrane module) and the flow rate of air used for gas washing, 12 Nm$^3$/hr (4 Nm$^3$/hr per membrane module).

After the concentration in the chamber was increased 20 times (95.0% in yield) by repeating the filtering step and the physical washing step twice, the drain step to discharge the concentrated waste water in the chamber was carrier out. At the drain step to discharge the suspended matter peeled off at the physical washing step, it was discharged by fully opening 50A piping installed at the bottom of the chamber, and by keeping the valve open for 15 seconds after a pressure type liquid level sensor installed at the bottom of the chamber detected that the water depth in the chamber came to 0 m, the concentrated waste water was completely discharged out of the chamber.

Operation for about one month under these operating conditions gave an inter-membrane differential pressure of no more than 50 kPa, indicating that stable operation was possible.

[Comparative Example 3]

The membrane module and the membrane separator used in Comparative Example 4 were the same as those used in Embodiment 1. By using the membrane separator, continuous operation was performed on river water of 5 to 10 degrees in average turbidity and 200 to 300 degrees in maximum turbidity as untreated water. Sodium hypochlorite was added to the untreated water to make the concentration of residual chlorine about 0.5 mg/L. As the steps of operation, an untreated water feeding step, the filtering steps and physical washing steps, and a drain step were combined.

Regarding the set conditions for the steps of operation, at the untreated water feeding step, the quantity of untreated water to be fed into the chamber was set to 13.5 m$^3$/hr. At the filtering step, filtering operation was performed for about 40 minutes in a state in which the whole membranes were immersed. The filtering operation was carried out with a differential membrane pressure being applied to the secondary side of the membrane as the negative pressure side. The membrane filtering flow rate at the filtering step was 13.5 m$^3$/hr (4.5 Nm$^3$/hr per membrane module).

After the completion of the filtering step, the physical washing step was performed. At the physical washing step, backwashing and gas washing with air were carried out simultaneously. The flow rate of backwashing was set to 20.25 m$^3$/hr (6.75 Nm$^3$/hr per membrane module) and the flow rate of air used for gas washing, 12 Nm$^3$/hr (4 Nm$^3$/hr per membrane module).

After the concentration in the chamber was increased 20 times (95.0% in yield) by carrying out the filtering step and the physical washing step once each, the drain step to discharge the concentrated waste water in the chamber was carrier out. At the drain step to discharge the suspended matter peeled off at the physical washing step, it was discharged by fully opening 50A piping installed at the bottom of the chamber, and by keeping the valve open for 15 seconds after a pressure type liquid level sensor installed at the bottom of the chamber detected that the water depth in the chamber came to 0 m, the concentrated waste water was completely discharged out of the chamber.

When operation was carried on for about one week under these operating conditions, the inter-membrane differential pressure surpassed 80 kPa, making it impossible to give no more negative pressure, and stable operation was made impossible.

[Industrial Applicability]

Suitable use is possible in those fields where filter membranes are applied to raw water such as river water, lake water, ground water, improunded water, secondary treated water of sewage, industrial effluent or sewage or where filter membranes are applied to separation or concentration of valuables.

[Brief Description of the Drawings]

Fig. 1A is a schematic diagram showing an outline of a normal filtering step.

Fig. 1B is a schematic diagram showing an outline of the filtering step in a state in which the filter membranes are partly immersed.

Fig. 2 is a flow chart showing an example of treatment flow into which a washing method of a membrane according to the invention is incorporated.

[Description of Reference Signs]

1       Raw water
3       Raw water feed pump
5       Filtered water tank
6       Backwash pump
7       Oxidizer tank
8       Oxidizer feed pump
9       Compressor
10      Electromagnetic valve
11      Immersion chamber
12      Suction pump
101     Filter membrane
102     Membrane module
103     Chamber
F1      Membrane filtering flow rate at normal filtering step
F2      Membrane filtering flow rate in a state where filter membranes are partly immersed
L       Effective length of filter membranes
L'      Length of filter membranes not in contact with untreated water in a state where filter membranes are partly immersed

**Claims**

1.  A method of operating a membrane separator in which a membrane module (102) comprising a large number of immersed hollow fiber membranes (101) is installed in an untreated water chamber (103), said method comprising:

    a filtering step at which untreated water (1) is filtered by giving a differential pressure between a primary untreated water side and a secondary treated water side of said hollow fiber membranes (101), wherein said filtering step further includes a filtering step (filtering step A) comprising a substep of feeding untreated water (1) into the chamber (103) while starting filtering of the untreated water in a state that the hollow fiber membranes (101) constituting said membrane module (102) are partly immersed and the liquid surface of untreated water in the chamber gradually becomes higher and an ensuing substep of filtering the untreated water in a state that a whole of said hollow fiber membranes (101) constituting said membrane module (102) are immersed;
    a physical washing step of gas washing by ejecting a gaseous washing medium onto the primary side of said membrane module (102) and of back-pressured water washing by feeding a backwashing medium from the secondary side of the hollow fiber membranes (101) and letting it pass to the untreated water side of the hollow fiber membranes (101); and
    a drain step of discharging waste water in the chamber (103) out of the system after repeating twice or more said filtering step and said physical washing step.

2.  The method of operating a membrane separator as claimed in Claim 1, wherein said filtering step further includes a filtering step B comprising a substep of filtering untreated water (1), after the completion of said physical washing step, without feeding untreated water into the chamber (103) until the hollow fiber membranes (101) constituting said membrane module (102) are partly immersed, and an ensuing substep of feeding untreated water into the chamber and filtering the untreated water in a state that a whole of said hollow fiber membranes (101) constituting said membrane module (102) are immersed.

3. The method of operating a membrane separator as claimed in Claim 1 or 2, wherein said physical washing step is a combination of a physical washing step A to be executed in a state that the whole hollow fiber membranes (101) constituting said membrane module (102) are immersed and another physical washing step B to be executed in a state that the hollow fiber membranes (101) constituting said membrane module (102) are partly immersed.

4. The method of operating a membrane separator as claimed in any of Claims 1 through 3, wherein both ends of said membrane module (102) are composed of a large number of immersed hollow fiber membranes (101) fixed by adhesion, with the hollow fiber membranes at a top end being open and the hollow fiber membranes at a bottom end being closed.

5. The method of operating a membrane separator as claimed in any of Claims 1 through 4, wherein, after the filtering step A and the physical washing step are executed and the filtering step B and said physical washing step are repeated once or more, waste water in the chamber is discharged out of the system.

**Patentansprüche**

1. Verfahren zum Betreiben einer Membrantrennvorrichtung, worin ein Membranmodul (102), welches eine große Zahl von eingetauchten Hohlfasermembranen (101) umfasst, in einer Kammer (103) für unbehandeltes Wasser angeordnet ist, wobei das Verfahren umfasst:

einen Filtrierschritt, bei dem unbehandeltes Wasser (1) filtriert wird, indem ein Differenzdruck zwischen einer primären, unbehandelten Wasserseite und einer sekundären, behandelten Wasserseite der Hohlfasermembranen (101) erzeugt wird, wobei der Filtrierschritt weiterhin einen Filtrierschritt (Filtrierschritt A) beinhaltet, umfassend einen Unterschritt des Zuführens von unbehandeltem Wasser (1) in die Kammer (103), während ein Filtrieren des unbehandelten Wassers in einem Zustand begonnen wird, bei dem die Hohlfasermembranen (101), welche das Membranmodul (102) bilden, teilweise eingetaucht sind und die flüssige Oberfläche des unbehandelten Wassers in der Kammer graduell ansteigt, und einen folgenden Unterschritt des Filtrierens des unbehandelten Wassers in einem Zustand, bei dem die ganzen Hohlfasermembranen (101), welche das Membranmodul (102) bilden, eingetaucht sind;
einen physikalischen Waschschritt eines Gaswaschens, wobei ein gasförmiges Waschmedium auf die primäre Seite des Membranmoduls (102) ausgestoßen wird, und eines Rückdruck-Wasserwaschens, wobei ein Rückwaschmedium von der sekundären Seite der Hohlfasermembranen (101) zugeführt wird und dieses zur Seite des unbehandelten Wassers der Hohlfasermembranen (101) passieren gelassen wird; und
einen Abfließschritt, bei dem nach zweimaliger oder mehrmaliger Wiederholung des Filtrierschritts und des physikalischen Waschschritts Abwasser in der Kammer (103) aus dem System abgegeben wird.

2. Verfahren zum Betreiben einer Membrantrennvorrichtung nach Anspruch 1, worin der Filtrierschritt weiterhin einen Filtrierschritt B beinhaltet, umfassend einen Unterschritt des Filtrierens von unbehandeltem Wasser (1), nach Beendigung des physikalischen Waschschritts, ohne unbehandeltes Wasser in die Kammer (103) einzuführen, bis die Hohlfasermembranen (101), welche das Membranmodul (102) bilden, teilweise eingetaucht sind, und einen folgenden Unterschritt des Zuführens von unbehandeltem Wasser in die Kammer und Filtrieren des unbehandelten Wassers in einem Zustand, bei dem die ganzen Hohlfasermembranen (101), welche das Membranmodul (102) bilden, eingetaucht sind.

3. Verfahren zum Betreiben einer Membrantrenn-vorrichtung nach Anspruch 1 oder 2, worin der physikalische Waschschritt eine Kombination eines physikalischen Waschschritts A, welcher in einem Zustand ausgeführt werden soll, bei dem die ganzen das Membranmodul (102) bildenden Hohlfasermembranen (101) eingetaucht sind, und eines anderen physikalischen Waschschritts B ist, welcher in einem Zustand ausgeführt werden soll, bei dem die das Membranmodul (102) bildenden Hohlfasermembranen (101) teilweise eingetaucht sind.

4. Verfahren zum Betreiben einer Membrantrennvorrichtung nach einem der Ansprüche 1 bis 3, wobei beide Enden des Membranmoduls (102) aus einer großen Anzahl von eingetauchten Hohlfasermembranen (101), die durch Haftung fixiert sind, gebildet sind, wobei die Hohlfasermembranen am oberen Ende offen sind und die Hohlfasermembranen am unteren Ende geschlossen sind.

**EP 2 070 585 B1**

**5.** Verfahren zum Betreiben einer Membrantrenn-vorrichtung nach einem der Ansprüche 1 bis 4, worin, nachdem der Filtrierschritt A und der physikalsiche Waschschritt ausgeführt werden und der Filtrierschritt B und der physikalische Waschschritt einmal oder mehrmals wiederholt werden, Abwasser in der Kammer aus dem System abgegeben wird.

**Revendications**

**1.** Procédé de fonctionnement d'un séparateur à membrane dans lequel un module de membrane (102) comprenant un grand nombre de membranes à fibres creuses immergées (101) est installé dans une chambre d'eau non traitée (103), ledit procédé comprenant :

une étape de filtration dans laquelle de l'eau non traitée (1) est filtrée en fournissant une pression différentielle entre un premier côté d'eau non traitée et un second côté d'eau non traitée desdites membranes à fibreuses creuses (101), dans laquelle ladite étape de filtration comprend de plus une étape de filtration (étape de filtration A) comprenant une sous-étape d'introduction d'eau non traitée(1) dans la chambre (103), tout en démarrant la filtration de l'eau non traitée dans un état tel que les membranes à fibres creuses (101) constituant ledit module de membrane (102) sont partiellement immergées et la surface de liquide d'eau non traitée dans la chambre augmente progressivement et une sous-étape subséquente de filtration de l'eau non traitée dans un état tel que la totalité desdites membranes à fibres creuses (101) constituant ledit module de membrane (102) est immergée ;
une étape de lavage physique consistant à laver au gaz par éjection d'un milieu de lavage gazeux sur le premier côté dudit module de membrane (102) et à laver l'eau contre-pressurisée en introduisant un milieu de lavage retour du second côté des membranes à fibres creuses (101) et en le laissant passer vers le côté d'eau non traitée des membranes à fibres creuses (101) ; et
une étape de drainageconsistant à évacuer les eaux usées dans la chambre (103)à l'extérieur du système après répétition deux fois ou plus de ladite étape de filtration et de ladite étape de lavage physique.

**2.** Procédé de fonctionnement d'un séparateur à membrane selon la revendication 1, dans lequel ladite étape de filtration comprend de plus une étape de filtration B comprenant une sous-étape de filtration d'eau non traitée (1), après l'achèvement de ladite étape de lavage physique, sans introduction d'eau non traitée dans la chambre (103) jusqu'à ce que les membranes à fibres creuses (101) constituant ledit module de membrane (102) sont partiellement immergées, et une sous-étape subséquente d'introduction d'eau non traitée dans la chambre et de filtration de l'eau non traitée dans un état tel que la totalité desdites membranes à fibres creuses (101) constituant ledit module de membrane (102) est immergée.

**3.** Procédé de fonctionnement d'un séparateur à membrane selon la revendication 1 ou 2, dans lequel ladite étape de lavage physique est une combinaison d'une étape de lavage physique A à exécuter dans un état tel que la totalité des membranes à fibres creuses (101) constituant ledit module de membrane (102) est immergée et d'une autre étape de lavage physique B à exécuter dans un état tel que les membranes à fibres creuses (101) constituant ledit module de membrane (102) sont partiellement immergées.

**4.** Procédé de fonctionnement d'un séparateur à membrane selon l'une quelconque des revendications 1 à 3, dans lequel les deux extrémités dudit module de membrane (102) sont constituées d'un grand nombre de membranes à fibres creuses immergées (101) fixées par adhérence, avec les membranes à fibres creuses à l'extrémité supérieure étant ouvertes et les membranes à fibres creuses à l'extrémité de fond étant fermées.

**5.** Procédé de fonctionnement d'un séparateur à membrane selon l'une quelconque des revendications 1 à 4, dans lequel, après que l'étape de filtration A et l'étape de lavage physique sont exécutées et l'étape de filtration B et ladite étape de lavage physique sont répétées une fois ou plus, les eaux usées dans la chambre sont évacuées à l'extérieur du système.

# FIG.1A

101

102

103

L

F1

# FIG.1B

101

102

103

L'

L

F2

# FIG.2

| 1 | 3 | 12 | 5 |
|---|---|---|---|
| RAW WATER | RAW WATER FEED PUMP | SUCTION PUMP | FILTERED WATER TANK |

11 IMMERSION CHAMBER

6 BACK WASH PUMP

10 ELECTRO-MAGNETIC VALVE

8 OXIDIZER FEED PUMP

9 COM-PRESSOR

7 OXIDIZER TANK

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0030742 A
- JP 6071540 B
- JP 3351037 B
- JP 63042703 A
- JP 11147028 A
- WO 2005082498 A1
- WO 03013706 A1
- WO 2005021140 A1